(19)

Europäisches Patentamt
European Patent Office
Office européen des brevets

(11) **EP 3 418 549 B1**

(12) **EUROPEAN PATENT SPECIFICATION**

(45) Date of publication and mention of the grant of the patent:
**08.07.2020 Bulletin 2020/28**

(51) Int Cl.:
**F02M 31/13** *(2006.01)*          **F02D 41/00** *(2006.01)*
**H05B 3/00** *(2006.01)*          **H05B 1/02** *(2006.01)*

(21) Application number: **18170578.1**

(22) Date of filing: **03.05.2018**

(54) **INTAKE AIR HEATING SYSTEM FOR A VEHICLE**

EINLASSLUFTHEIZSYSTEM FÜR EIN FAHRZEUG

SYSTÈME DE CHAUFFAGE D'AIR D'ADMISSION POUR UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2017 US 201715628974**

(43) Date of publication of application:
**26.12.2018 Bulletin 2018/52**

(73) Proprietor: **Phillips and Temro Industries Inc.**
**Eden Prairie, MN 55344 (US)**

(72) Inventors:
  • **Tonkin, Steven W.**
    **Eden Prairie, MN 55346 (US)**

  • **Douglas, Jeremy N.**
    **Chanhassen, MN 55317 (US)**
  • **Halberg, Roger J.**
    **Savage, MN 55378 (US)**

(74) Representative: **Angerhausen, Christoph**
**Boehmert & Boehmert**
**Anwaltspartnerschaft mbB**
**Pettenkoferstrasse 22**
**80336 München (DE)**

(56) References cited:
**EP-A1- 1 852 597          DE-A1- 10 156 037**
**DE-A1-102012 004 526     US-A1- 2010 125 400**
**US-A1- 2012 118 254**

**Description**

FIELD

The present disclosure relates to intake air heating systems in internal combustion engines and more particularly to electronic control of intake air heating systems.

BACKGROUND

An air-fuel mixture for an internal combustion engine is harder to ignite when cold, leading to less complete combustion and increased emissions. Once the engine has warmed up, the cylinders may warm the air-fuel mixture sufficiently. However, at startup, the engine may have no heat to contribute to the air-fuel mixture. Cold start conditions are especially severe when the ambient air temperature is low. An intake air heating system may be used to heat air arriving at the engine. This system may be located within or prior to the intake manifold. The intake air heating system may be brought up to temperature prior to attempting to start the engine.

Heating the intake air may allow for easier ignition and may hold the fuel in suspension more effectively, leading to fewer fuel droplets falling out of suspension in the air. Intake air heating systems may allow for faster starts of the engine, may reduce startup emissions (sometimes evidenced as "white smoke"), reduce engine wear, reduce overall battery consumption during startup, and reduce startup fuel consumption.

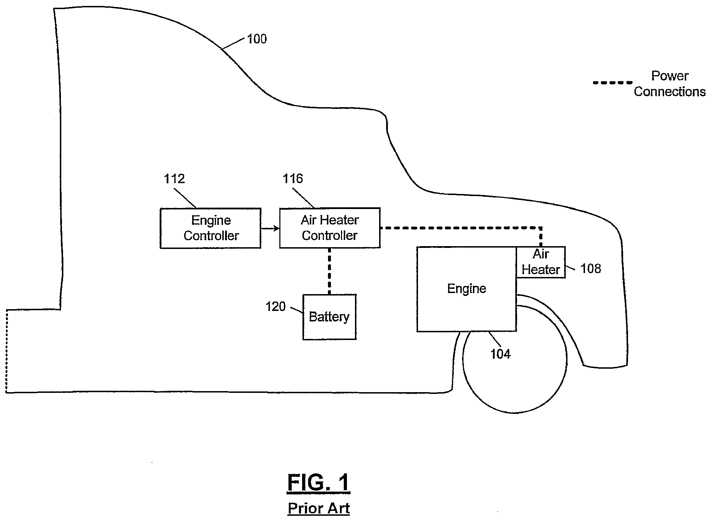

In FIG. 1, a not-to-scale illustration of a truck 100 includes an engine 104 and an air heater 108. While not shown, the intake manifold for the engine 104 may contain the air heater 108. Based on a control signal from an engine controller 112, an air heater controller 116 connects a battery 120 to the air heater 108.

For example, the air heater controller 116 may include an electromechanical relay. The air heater controller 116 may also include a timer so that the air heater 108 does not reach an over-temperature condition. However, if the engine 104 is started from a warm condition, where the air heater 108 is not cold but warm, this time-out may be too long, and the air heater 108 may experience an over-temperature condition. This may increase wear on the air heater 108. An intake air heating system and a method of operating such an intake air heating system is known from EP 1 852 597 A1.

SUMMARY

An intake air heating system for a vehicle includes an electrical switching device configured to selectively connect a battery of the vehicle to a heater coil in contact with intake air of the vehicle. The intake air heating system includes a control circuit configured to, in response to an enable signal from an engine controller, drive the electrical switching device to connect the battery to the heater coil at full current. The control circuit is configured to measure a resistance of the heater coil indicative of an initial temperature of the heater coil and, in response to an estimated temperature of the heater coil exceeding a desired temperature value, modulate the electrical switching device to reduce current from the battery of the vehicle to the heater coil.

The intake air heating system according to the present invention is characterized in that the control circuit is configured to estimate the temperature of the heater coil based on a sum of the initial temperature of the heater coil and a temperature increase, and that the control circuit is configured to estimate the temperature increase by repeatedly measuring a current value of current through the electrical switching device and accumulating a squared value of the measured current values or accumulating a squared value of averages of current measured over a period of time.

In other features, the control circuit is configured to estimate the temperature increase based on a lookup table of temperature increases indexed by accumulated current squared values. In other features, the control circuit is configured to estimate the initial temperature of the heater coil based on a rate of rise of the resistance of the heater coil over a period of interest. In other features, the control circuit is configured to, prior to estimating the initial temperature of the heater coil, scale the rate of rise by a ratio of (i) a reference current squared value to (ii) the accumulated current squared value.

In other features, the control circuit is configured to measure the resistance of the heater coil by measuring a current value of current through the electrical switching device and a voltage value at a terminal of the electrical switching device and calculating the resistance of the heater coil based on a ratio of the measured voltage value to the measured current value. In other features, the control circuit is configured to measure a reference voltage at the terminal of the electrical switching device while the electrical switching device is off and subtract the reference voltage from the measured voltage value prior to calculating the resistance of the heater coil.

In other features, the electrical switching device comprises a plurality of transistors connected in parallel. In other features, the control circuit is configured to drive the electrical switching device using pulse-width modulation. In other features, the system includes a metal enclosure housing the electrical switching device and the control circuit. The electrical switching device is thermally coupled to the metal enclosure, which absorbs heat from the electrical switching device. In otherfeatures, the system includes a temperature sensor configured to measure a temperature of at least one of the control circuit, the electrical switching device, and the metal enclosure. The control circuit is configured to turn off the electrical switching device in response to the measured temperature exceeding a temperature threshold.

In other features, the system includes a transceiver configured to (i) receive the desired temperature value from the engine controller over a communications bus and (ii) provide the desired temperature value to the control circuit. In other features, the transceiver is configured to command the control circuit to enter a low-power mode in response to inactivity on the communications bus for more than a predetermined period of time. The transceiver is further configured to command the control circuit to enter an operating mode in response to receiving a predetermined signal on the communications bus. The control circuit consumes less power when in the low-power mode than when in the operating mode.

In other features, the battery is characterized by an internal resistance and the control circuit is configured to measure a first voltage of the battery while the battery is disconnected from the heater coil by the electrical switching device. The control circuit is further configured to, once the electrical switching device connects the heater coil to the battery, measure a second voltage of the battery and measure a current through the electrical switching device. The control circuit is further configured to determine the internal resistance based on the first voltage, the second voltage, and the current.

A method of operating an intake air heating system for a vehicle includes, in response to an enable signal from an engine controller, driving an electrical switching device to connect a battery to a heater coil at full current. The method includes measuring a resistance of the heater coil indicative of an initial temperature of the heater coil. The method includes, in response to the temperature of the heater coil exceeding a desired temperature value, modulating the electrical switching device to reduce current from the battery of the vehicle to the heater coil.

The method according to the present invention is characterized in that it includes estimating the temperature of the heater coil based on a sum of the initial temperature of the heater coil and a temperature increase, wherein estimating the temperature increase includes repeatedly measuring a current value of current through the electrical switching device and accumulating a squared value of the measured current values or accumulating a squared value of averages of current measured over a period of time.

In other features, the method includes estimating the initial temperature of the heater coil based on a rate of rise of the resistance of the heater coil over a period of interest. In other features, the method includes, prior to estimating the initial temperature of the heater coil, scaling the rate of rise by a ratio of (i) a reference current squared value to (ii) the accumulated current squared value.

Further areas of applicability of the present disclosure will become apparent from the detailed description, the claims and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings.

FIG. 1 is a functional block diagram of an engine with an intake air heating system.

FIG. 2 is a functional block diagram of an engine with an intake air heating system showing selected power and ground connections.

FIG. 3A is a functional block diagram of an example implementation of an air heater controller.

FIG. 3B is a functional block diagram of another example implementation of an air heater controller.

FIG. 4 is a flowchart of example engine controller operation related to starting an engine having an intake air heating system.

FIG. 5 is a flowchart of alternative engine controller operation for starting an engine having an intake air heating system.

FIG. 6A and FIG. 6B together are a flowchart of example operation of an air heater controller according to the principles of the present disclosure.

FIG. 7A and FIG. 7B together are another flowchart of example operation of an air heater controller according to the principles of the present disclosure.

FIG. 8 is an example time plot demonstrating heater resistivity changes based on temperature.

FIG. 9 is a time plot of example current and current derivative traces for an intake air heater in various conditions.

In the drawings, reference numbers maybe reused to identify similar and/or identical elements.

DETAILED DESCRIPTION

In the prior art, an engine controller may actuate an intake air heater system for a predetermined period of time that is based on the amount of time expected for the intake air heater system to rise to operating temperature. This fixed time may not take into account the fact that the air heater may be warmer than ambient air, and does not take into account that a warmer ambient temperature allows the air heater come up to temperature more quickly.
An air heater controller according to the present disclosure is able to determine the air heater temperature and control the current provided to the air heater to reach and maintain a desired operating temperature. In this way, even if the engine controller actuates the air heater system for longer than necessary, the air heater will not reach an over-temperature condition.
Placing a temperature sensor within the air heater requires an additional part and additional wiring - for example, one or two additional leads running from the air heater controller to the air heater. Further, the high temperatures and, in some cases, presence of fuel may create reliability concerns for a temperature sensor. The inventors of the present disclosure have recognized that a resistive coil of the air heater itself acts as a form of thermistor, changing resistance as the temperature changes.
This change in heater coil resistance from a cold ambient starting temperature to operating temperature may be used to infer temperature and control the heating coil accordingly. Equivalently, the resistance itself may be used for control and compared against a target resistance corresponding to the operating temperature.
If the total change in heater coil resistance were orders of magnitude greater than the connection resistance between the air heater controller and the air heater, the connection resistance may be ignored. That may not be an accurate assumption and so connection resistanceis determined and factored out. With a known resistance for the air heater, a first approach might be to simply measure the temperature of the air heater (without supplying power to the air heater), and calculating that the difference between the measured resistance and the known airheater resistance is the connection resistance.
However, the resistance of the air heater will change depending on the ambient air temperature. If the air heater controller included an ambient air temperature sensor or could receive ambient air temperature data, such as from the engine controller, the air heater controller could compensate for that resistance change based on predetermined empirical data about the resistance of the air heater in various ambient conditions.
Even with this ambient compensation, the air heater may not actually be at the ambient temperature. This will likely be true in a warm or hot start situation, where the engine has not "soaked" in the ambient temperature for a long enough period that all the engine components have returned to the ambient temperature. If the engine components have returned to the ambient temperature, such as when a vehicle is sitting overnight, this is referred to as a cold start. Without knowing the temperature of the air heater, the air heater controller cannot infer the resistance of the air heater in order to calculate the connection resistance.
In this disclosure, it will be assumed that the resistance of the air heater increases as the temperature increases. The resistance as well as its change with respect to temperature depends on the chemistry of the elements used in the air heater. Therefore, an apparently increased connection resistance may actually mean that the air heater is hotter than the ambient temperature.
Because the increased measured resistance of the air heater can mean either that the air heater is warmer than ambient or that the connection resistance is higher, a method of differentiating these has been developed. It has been observed experimentally that the rate of change of resistance is greatest at the beginning of the air heater warming up and slows down as the air heater reaches operating temperature. Therefore, the temperature of the air heater at the beginning of startup can be inferred based on the rate of change of resistance during startup.
Once the air heater temperature at startup is determined, its resistance may be known empirical data stored by the air heater controller. The resistance of the air heater can then be subtracted from the measured resistance at startup to determine the connection resistance. Because the connections to the air heater do not warm as much as the air heater itself, the temperature dependency of connection resistance can be ignored in some implementations as trivial.
Knowing the connection resistance and having preprogrammed the resistance of the air heater at an operating temperature (such as 600 °C), the air heater controller can modulate current being supplied to the air heater to achieve a desired resistance. Once the measured resistance is equal to the sum of the target heater resistance plus the connection resistance, the current can be reduced to maintain measure resistance at that level.

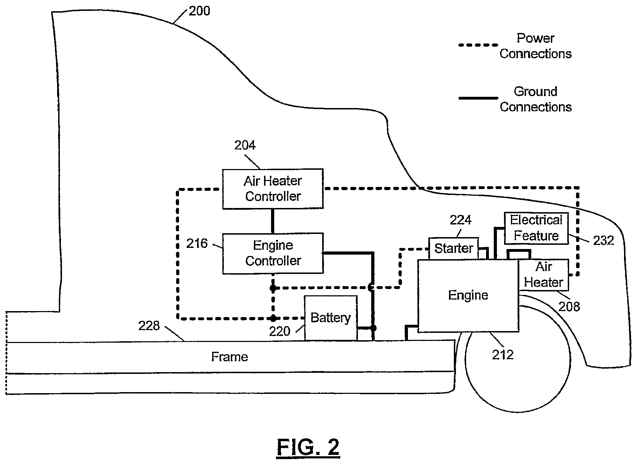

Measuring resistance is generally performed by measuring voltage and current and calculating their ratio. One additional complication is that the voltage may be measured at the air heater controller, but the ground reference of the air heater controller may be different from the effective ground seen by the air heater. As explained in more detail in FIG. 2 below, other electrical features of the engine, such as electric fans or electronic fuel injection pumps, may share a ground connection with the air heater. As voltage drops along the connection of the ground back to the battery, the voltage at the negative side of the air heater may not be at zero volts as the air heater controller expects, but at a higher voltage. Further, the ground reference of the air heater controller may also not be at the zero volts of the battery output terminal.

Therefore, in order to get an accurate reading of the voltage across the air heater, the air heater controller may need to measure the voltage on the negative side of the air heater. When no current is flowing through the air heater, the positive and negative side of the air heater will be at the same voltage. As a result, the air heater controller can (temporarily) turn off the air heater, measure the voltage, and then use that voltage as a reference of the negative voltage of the air heater.

The reference can be subtracted from the voltage at the positive side of the air heater when current is being supplied to the air heater. This reference (referred to as heater ground) voltage measurement can be performed as frequently as needed based on expected fluctuations in the heater ground. For example, if fluctuations of interest in the heater ground take place over the course of seconds rather than milliseconds, the heater ground measurement may be performed once per second.

Returning to the figures, FIG. 2 shows selected ground and power connections in a truck 200 configured with an air heater controller 204 and an air heater 208, according to the principles of the present disclosure. The air heater 208 selectively heats air being provided to an engine 212. The air heater controller 204 may be activated by engine controller 216. The air heater controller 204 provides current to the air heater 208 from a battery 220. A starter 224 selectively rotates the crankshaft of the engine and is also powered by the battery 220. While different reference numerals are used, the air heater controller 204 may be configured for use with the engine controller 112 and the air heater 108 of FIG. 1. In other words, the engine controller 112 may not need new programming in order to work with the air heater controller 204 of the present disclosure.

As seen by the dashed line, the battery 220 provides power to the starter 224, to the engine controller 216, and to the air heater controller 204, which selectively connects that power to the air heater 208. Meanwhile, the solid lines show the ground connections of the battery to a frame 228 of the truck 200 as well as to the engine controller 216. In some vehicles, the engine 212 is grounded to the frame 228. This is simply one grounding configuration shown for example, and the principles of the present disclosure are not limited to this configuration.

Other components, such as the air heater 208, the starter 224, and an additional electrical feature 232, may be grounded through the engine 212 (in particular, the engine block) to the frame 228. As a result, the effective ground voltage seen by the air heater 208 is based on the resistance of the ground path back to the battery 220 multiplied by the current following that same ground path. Generally, the starter 224 will not be running at the same time as the air heater 208.

However, other electrical features, such as the electrical feature 232, may be running at the same time as the air heater 208. The current drawn by the electrical feature 232 may cause the ground voltage of the air heater 208 to change. For example, the electrical feature 232 may be an electric fan or a component of electronic fuel injection, such as a fuel pump. This variation in the ground voltage seen by the air heater 208 is measured and removed, as described in more detail below.

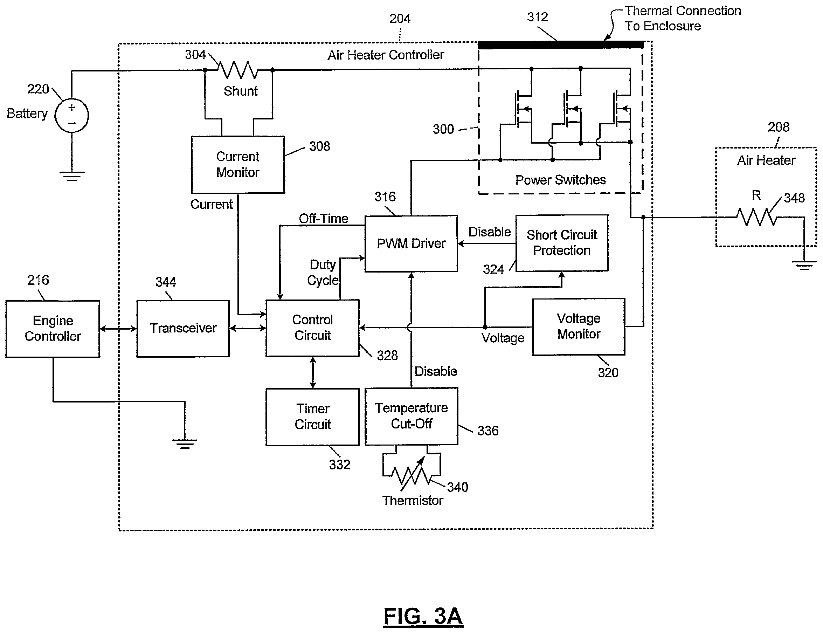

In FIG. 3A, an example implementation of the air heater controller 204 includes one or more power switches 300 that selectively connect the battery 220 to the air heater 208. A shunt resistor 304 may be placed in series with the power switches 300 and a voltage across the shunt resistor 304 is measured by a current monitor 308 to determine the amount of current flowing through the power switches 300.

The power switches 300 are arranged in parallel and may be controlled by the same gate signal. The power switches 300 may be included in a single package or in multiple packages that are thermally connected to a heat sink, such as an enclosure of the air heater controller 204. A thermal connection 312 is shown for illustration in FIG. 3A and may take the form of direct metal-to-metal contact or a thermal paste.

To protect against reverse battery connection, a diode may be placed in series with the power switches 300 to prevent backflow of current toward the battery 220. This diode may take the form of multiple diodes in parallel and each of the diodes may actually be an electrical switch configured to operate as a diode. For example, a set of electrical switches connected in parallel may be controlled to create an open circuit when voltages across the set of electrical switches indicate that current is flowing toward the battery 220.

The power switches 300 are driven by a pulse-width modulation (PWM) driver 316. For example, during an initial power-up phase, the duty cycle of the PWM may be set to 100% so that the power switches 300 remain on constantly to provide power to the air heater 208. The PWM driver 316 may control the power switches 300 to produce shaped pulses to avoid producing excessive electrical emissions. For more information, see U.S. Patent 7,472,695, issued January 6, 2009, titled "Controller for Air Intake Heater," Attorney Docket No. 4898-000478-US-CPB, with first-named inventor Andrew Prust

A voltage monitor 320 measures the load voltage- that is, the voltage at the node between the power switches 300 and the air heater 208. The voltage monitor 320 may need to measure a voltage that is as much as 500 mV below the ground of the airheater controller 204 when determining the effective ground voltage seen by the air heater 208.

A short circuit protection circuit 324 outputs a disable signal to the PWM driver 316 if the voltage measured by the voltage monitor 320 is too low. If there is a short circuit or a partial short circuit in the air heater 208, the voltage measured by the voltage monitor 320 will be much lower than normal. For example, the expected voltage across the air heater 208 may be 10 or 11 volts and the threshold may therefore be set at five volts. The short circuit protection circuit 324 may operate in the analog domain and provide quicker response than a microprocessor, which may need to startup and execute boot code before assessing the voltage from the voltage monitor 320.

In other implementations, the short circuit protection circuit 324 may operate based on the current measured by the current monitor 308. For example, the short circuit protection circuit 324 may identify a short circuit in response to the measured current exceeding a threshold for longer than a predetermined period of time. In various implementations, the short circuit protection circuit 324 may receive voltage and current and identify a short circuit based on either voltage or current conditions occurring.

A control circuit 328, which as described below may be a programmable logic device, a microprocessor and memory, etc., receives the measured voltage and the measured current and instructs the PWM driver 316 with a commanded duty cycle. The PWM driver 316 may send back an indication of when the power switches 300 are off. The control circuit 328 may then take voltage measurements while the power switches 300 are off in order to determine the effective ground voltage seen by the air heater 208.

The control circuit 328 may include an analog-to-digital converter (ADC) for measuring the current and the voltage. If the same ADC is multiplexed to measure both the current and the voltage, some ADC errors or non-linearity may cancel when the voltage and current are divided to calculate resistance.

A timer circuit 332, which may be integrated within the control circuit 328, times various periods of interest to the control circuit 328. For example, one timer may measure the entire time that the air heater 208 has been heating up for the current actuation of the air heater 208 Another timer may track how frequently the ground voltage for the air heater 208 is checked. Another timer may measure the period between resistance measurements.

A temperature cut-off 336 supplies a disable signal to the PWM driver 316 in response to a temperature of the air heater controller 204 increasing above a threshold. For example, a thermistor 340 may measure a temperature of an enclosure of the air heater controller 204, a package of one or more of the power switches 300, etc.

The control circuit 328 receives a signal requesting intake ar heating from the engine controller 216. For example, a single conductor from the engine controller 216 to the control circuit 328 may be asserted to request intake air heating while a second conductor between the engine controller 216 and the control circuit 328 is used for the control circuit 328 to signal back an error condition.

In some implementations, the signal provided to the control circuit 328 is binary, indicating either that intake air heating is requested or is not requested. In other implementations, the signal may be modulated in either the analog or digital domains to indicate a degree of heating requested, such as a certain desired temperature of the heater.

Similarly, the signal returned to the engine controller 216 from the control circuit 328 may be a binary signal indicating either that there is no error or that there is an error. This return signal could also be modulated in the analog or digital domains to indicate the type of error or to indicate other conditions, such as the air heater 208 having reaching operating temperature. In some implementations, a transceiver 344 allows the control circuit 328 to communicate with the engine controller 216 over a vehicle bus, such as the controller area network (CAN) bus or the J1939 bus.

In various implementations, components of the air heater controller 204, such as the control circuit 328, may be configured to turn off completely or enter a low-power state. For example, the transceiver 344 may command the components of the air heater contrdler 204 to enter low-power states in response to having received no signals from the engine controller 216 for more than a predetermined period of time. The transceiver 344 may wait for a predetermined wake-up signal or packet before returning the air heater controller 204 to full-power mode. When returning to full-power mode, the control circuit 328 may need to perform a startup routine prior to running the operational code that controls the PWM driver 316.

In FIG. 3A, while the intrinsic connection resistances are not shown, the resistance of the element in the air heater 208 is shown schematically as a resistor 348. Meanwhile, the battery 220 may be characterized by an internal resistance (not shown), which may be one indication of the health of the battery 220. The control circuit 328 may measure a first voltage of the battery 220 with the power switches 300 off. For example, the control circuit 328 may receive a voltage value of one of the terminals of the shunt resistor 304 measured by the current montor 308. The control circuit 328 can then turn on the power switches 300 and measure a second voltage of the battery 220 and the current through the shunt resistor 304. The internal resistance of the battery can then be calculated by the control circuit 328 as the difference between the first and second voltages divided by the current.

When the voltage measured by the voltage monitor 320 is divided by the current measured by the current monitor 308, the resulting resistance will be approximately equal to a resistance of the resistor 348 plus the connection resistances experienced between the air heater controller 204 and the air heater 208 as well as the air heater 208 back to the battery 220.

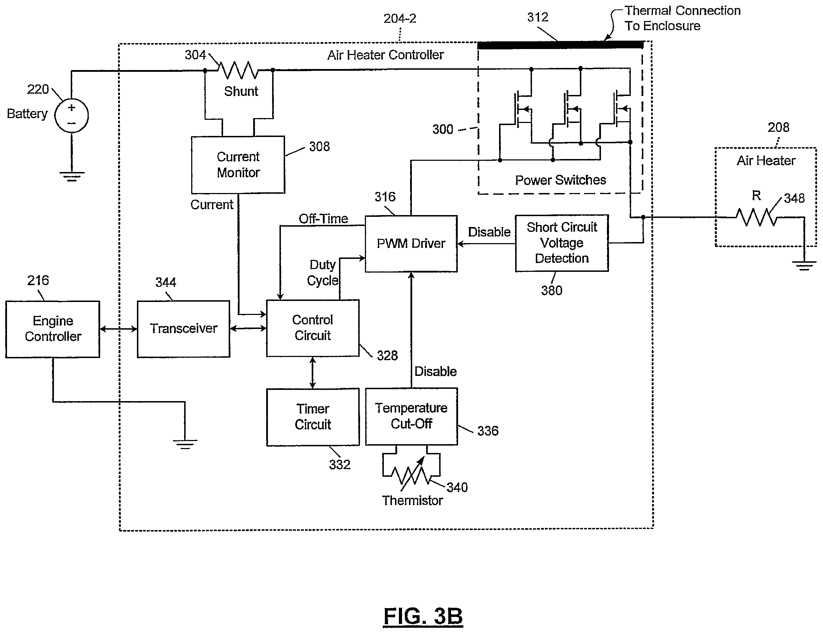

FIG. 3B is a block diagram of another example implementation of the air heater controller 204 and is labeled 204-2. Many components of the air heater controller 204-2 are similar to those of the air heater controller 204 in FIG. 3A. In FIG. 3B, the voltage monitor 320 of FIG. 3A is omitted.

Further, the short circuit protection circuit 324 is replaced with a short circuit voltage detection circuit 380. When the short circuit voltage detection circuit 380 detects a voltage representative of a short circuit across the resistor 348, a disable signal is sent to the PWM driver 316. For example, the short circuit voltage detection circuit 380 may include an analog voltage comparator that generates the disable signal in response to the voltage measured across the resistor 348 being less than a predetermined reference voltage.

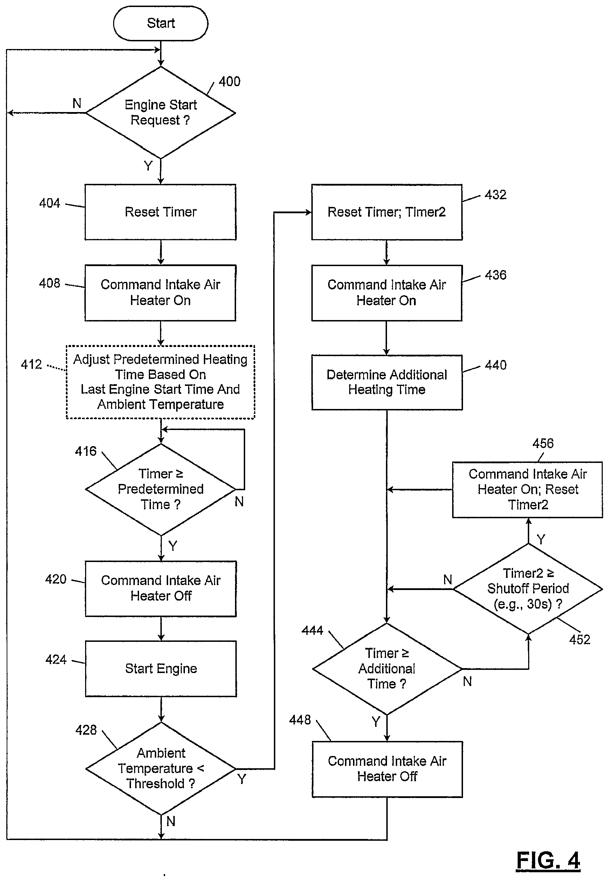

In FIG. 4, example operation related to engine starting for the engine controller begins at 400. If an engine start request is made, such as by a driver of the vehicle, control transfers to 404; otherwise, control remains in 400. At 404, control resets a timer, which starts at zero and counts upward. At 408, control commands the intake air heater to turn on.

At 412, an optional action is performed. The engine controller may have a predetermined time within which the intake air heater is expected to rise to operating temperature. The engine controller may adjust that predetermined heating time based on last engine start time and the ambient temperature. When the ambient temperature is higher, the predetermined heating time is reduced because the intake air heater will be able to come up to operating temperature more quickly. Further, if the last engine start time is relatively recent, the predetermined heating time may be reduced in proportion to how recent the last engine start timewas.

At 416, control compares the timer to the predetermined time, which may have been adjusted at 412. Once the timer exceeds the predetermined time, control transfers to 420. At 420, control commands the intake air heater to turn off so the battery capacity can be used by the starter. At 424, control starts the engine. Though a complicated process for the engine controller, the engine starting details may not be relevant to intake air heater control and are not shown.

At 428, after the engine is started, control determines whether the ambient temperature is less than a cold starting threshold. If so, control transfers to 432; otherwise, control returns to 400. At 432, control resets the timer and also resets a second timer, Timer2. The timer will be used to track additional intake air heating to facilitate engine warmup after starting. The second timer, Timer2, will be used to track a shutoff time of the intake air heating system. For example, the engine controller may determine that the intake air heater should remain on for two minutes. However, the intake air heating system may include an internal shutoff after 30 seconds. Therefore, Timer2 tracks this 30-second interval and renews the request for intake air heating after each 30 seconds.

At 436, control commands the intake air heater to turn on. At 440, control determines how much additional heating time is desired. This additional heating time may increase as the ambient temperature decreases. At 444, control compares a timer to the additional time determined at 440. If the additional time has elapsed, control transfers to 448; otherwise, control transfers to 452. At 448, the additional time for intake air heating is completed and control commands the intake air heater to turn off. Control then returns to 400.

At 452, control compares Timer2 to the shutoff period of the intake air heating system. For example, the shutoff period may be 30 seconds. If Timer2 has exceeded the shutoff period, control transfers to 456; otherwise, control returns to 444. At 456, control commands the intake air heater to turn on and resets Timer2. Control then returns to 444.

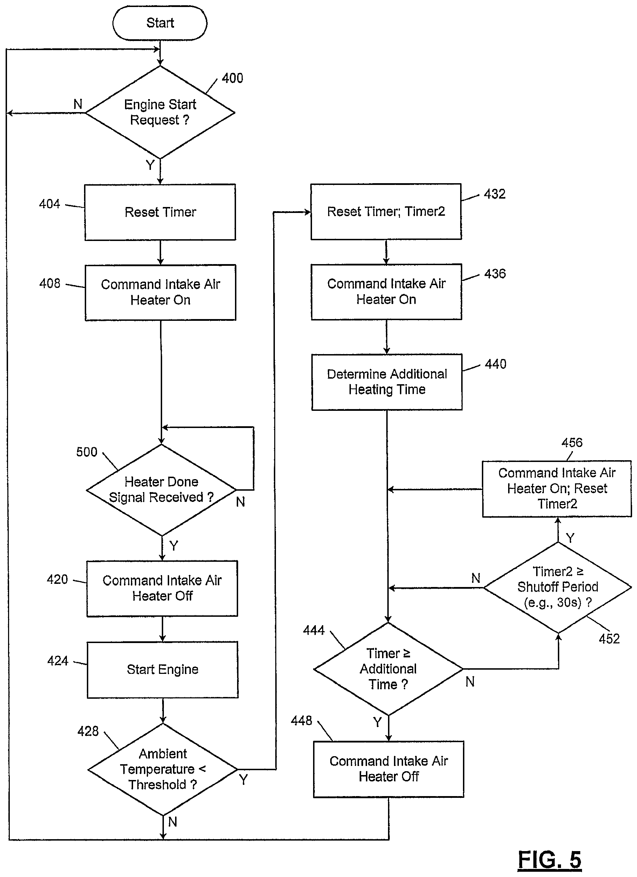

In FIG. 5, operation of the engine controller may be adapted based on feedback provided by the intake air heating system. When the intake air heating system is able to indicate that the heater has reached the operating temperature, the engine controller may be able to start the engine sooner. Reference numerals from FIG. 4 are used to indicate similar operations in FIG. 5. After commanding the intake air heater on at 408, control determines at 500 whether an indication that the heater is done has been received. If such a heater done signal has been received, control transfers to 420; otherwise, control remains at 500.

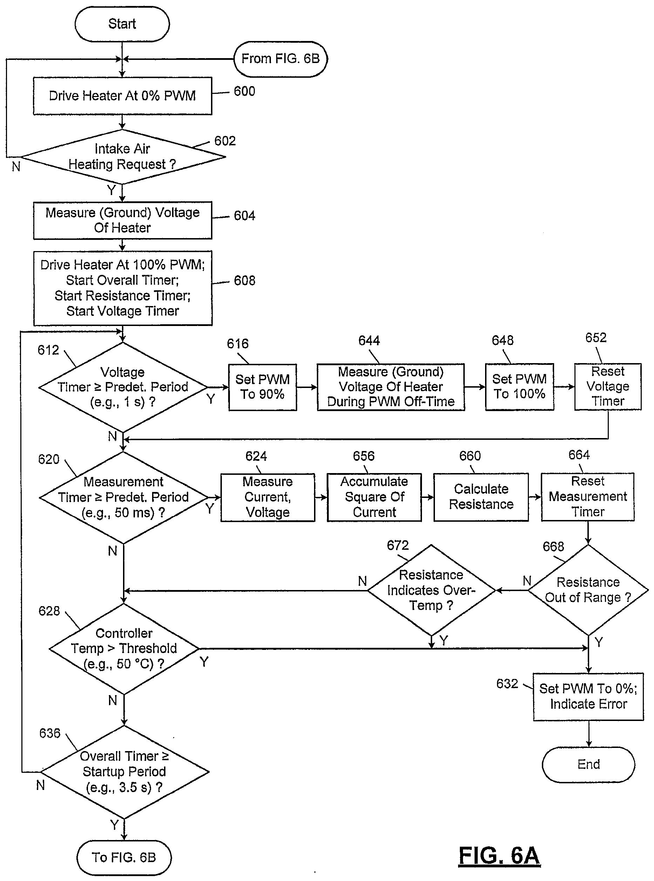

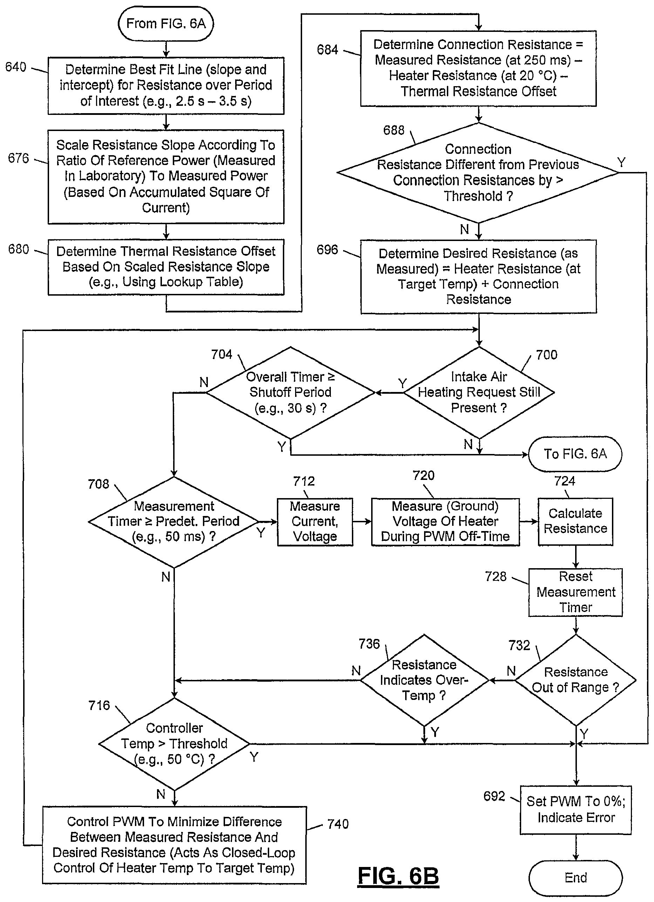

In FIG. 6A, example control performed by an intake air heating system begins at 600. For example, the control performed in FIG. 6A and FIG. 6B may be implemented as programming, such as computer-readable instructions, in the control circuit 328 of FIG. 3A or FIG. 3B. At 600, before an intake air heating request is received, control turns the heater off, such as by driving the heater using a 0% duty cycle pulse-width modulation (PWM). At 602, if an intake air heating request has been received, control transfers to 604; otherwise, control remains in 600.

At 604, control measures the voltage of the heater. Because no current is supplied to the heater, the voltage dropped across the heater is zero and the measured voltage is therefore the voltage at the negative side of the heater. As discussed above, this voltage may not be zero because of other current draws traveling across the same ground path as the intake air heater. This measured voltage is referred to as the ground voltage of the heater.

At 608, control drives the heater at 100% duty cycle PWM. In addition, control starts three timers: an overall timer, a measurement timer (for timing periods between resistance measurements), and a voltage timer (timing periods between ground voltage measurements). At 612, if the voltage timer is greater than or equal to a predetermined voltage measurement interval (such as one second), control transfers to 616; otherwise, control transfers to 620. In other implementations, the voltage measurement interval may not be set, and ground voltage measurement may instead be performed if the voltage measured at the switching elements changes at greater than a predetermined rate. For example, a change in voltage of over 50 mV within 200 milliseconds may indicate the need to reacquire the ground voltage.

At 620, control determines whether the measurement timer is greater than or equal to a predetermined resistance measurement interval (such as 50 milliseconds). If so, control transfers to 624; otherwise, control transfers to 628.

At 628, control determines whether the temperature of the controller is greater than a threshold. If so, control transfers to 632; otherwise, control continues at 636. At 636, control determines whether the overall timer is greater than or equal to a predetermined startup window (for example, 3.5 seconds). If so, control transfers to 640 of FIG. 6B; otherwise, control returns to 612. Note that the order of operations shown in FIG. 6A and FIG. 6B may be changed without departing from the teachings of the present disclosure. As a specific example, the tests at 612 and 620 may be reversed in order.

At 616, it is time for a ground voltage measurement. However, since the heater has been driven at 100% duty cycle, there is no off time in which to measure the ground voltage. Therefore, the PWM duty cycle is set to 90%. At 644, control measures the ground voltage of the heater during the next PWM off-time (that is, the 10% of the PWM period when the searches are turned off). At 648, control sets the PWM back to 100%. At 652, control resets the voltage timer and continues at 620.

At 624, it is time to measure resistance and therefore the current and voltage are measured. At 656, an accumulation of a square of the current value is also determined. This will be used in FIG. 6B to scale the rate of change of the resistance based on the conditions present in lab measurements.

At 660, control calculates resistance by dividing the measured voltage by the current. First, however, the measured voltage is adjusted by the most-recently measured ground voltage (measured either at 644 or 604). The measured ground voltage indicates a voltage across the connection resistance caused by a current draw other than that of the heater. At 664, control resets the measurement timer and continues at 668. If the resistance measured is outside an expected range (either below a minimum possible resistance, such as the lowest air intake heater resistance and zero connection resistance, or greater than an upper limit, such as the greatest expected heater resistance plus the greatest expected connection resistance), control transfers to 632; otherwise, control transfers to 672.

At 632, control sets the PWM to zero percent, thereby stopping the supply of current to the air heater. Control also indicates an error back to the engine controller and ends. At 672, control determines whether the resistance indicates an over-temperature condition. If so, control transfers to 632; otherwise, control transfers to 628. An over-temperature condition is indicated by the measure resistance being greater than the limit. For example, the limit may be based on a previously-measured connection resistance plus the resistance of the heater at a temperature that is considered to be too high. The connection resistance from prior startups may be increased by a predetermined percentage (such as 10% or 20%) to prevent false positives in the over-temperature check.

At 640 in FIG. 6B, the initial startup period has elapsed and control determines a best fit line for the measured resistance over a period of interest. For example, the period of interest may be half a second before and after the three second mark (where three seconds is the amount of time since the air intake heater was first turned on). The best fit line provides a slope and an intercept.

One technique of linear regression using least-squares fitting uses vertical distances from an array of points to a line described by $y = mx + b$, where m is the slope of the line and b is the y intercept. The method calculates the square of the distances described by $y_1 - (mx_i + b)$ and minimizes the sum of the squared distances. To fit the line to the points the following moments are calculated for the set of points:

$$\Sigma x_i{}^2$$

$$\Sigma x_i$$

$$\Sigma y_i$$

$$\Sigma x_i y_i$$

With N being the number of points summed, the y-intercept, b, is:

$$b = \frac{(\Sigma x_i^2)\,(\Sigma y_i) \;-\; (\Sigma x_i)\,(\Sigma x_i y_i)}{N(\Sigma x_i^2) \;-\; (\Sigma x_i)^2}$$

and the slope, m, is:

$$m = \frac{N(\Sigma x_i y_i) \;-\; (\Sigma x_i)\,(\Sigma y_i)}{N(\Sigma x_i^2) \;-\; (\Sigma x_i)^2}$$

As the air heater heats up, the calculations above can be performed by calculating r and t every 100 milliseconds and placing the points in an array. As the number N builds up from 1 to 15 calculate m for the slope. After there are N= 15 points in the array a FIFO (first in first out) process can be used to calculate the slope of the latest 15 points.

Control continues at 676, where the determined resistance slope from the best fit line is scaled. To account for differences in the power provided to the intake air heater during the present heating cycle compared to the heating cycle performed in the laboratory, the resistance slope is multiplied by the power measured in the lab (that is, the square of the current provided to the air heater in the lab) divided by the measured power (that is the accumulated value of the square of the current).

At 680, the scaled resistance slope is used to determine a thermal resistance offset. In other words, this indicates the difference in resistance between the heater at a reference temperature (such as 20° C) and the resistance of the heater at startup. For example, a lookup table may have a range of values of scaled resistance slopes and a corresponding set of values of thermal resistances offsets. Values of the scaled resistance slope falling between values in the lookup table may be interpolated using a linear or higher order interpolation. In other implementations, a mathematical expression may be determined from empirical data that maps scaled resistances sloped to thermal resistances offset.

An example of the lookup table is as follows:

| Apparent Heater Temp at Startup (°C) | Resistance Slope | Heater Thermal Offset Value |
|---|---|---|
| 880 | 0.0407 | 5.70 |
| 780 | 0.0820 | 5.50 |
| 680 | 0.1270 | 5.10 |
| 580 | 0.1715 | 4.70 |
| 480 | 0.2163 | 4.10 |
| 380 | 0.2609 | 3.40 |
| 280 | 0.3049 | 2.60 |
| 180 | 0.3478 | 1.80 |
| 80 | 0.39 | 0.80 |
| 20 | 0.4150 | 0.00 |
| -10 | 0.4354 | -0.30 |
| -40 | 0.4654 | -1.10 |

At 684, control is now able to determine the connection resistance present in series with the air heater by subtracting the heater resistance at the reference temperature (such as 20 °C) and the thermal resistance offset from the resistance measured at startup. In some implementations, the measured resistance at startup may be taken not at the very first reading, but instead at some small amount of time later (such as 250 milliseconds) to avoid errors caused by startup transients. For example, the small amount of time may mean less than one second.

At 688, control determines whether the calculated connection resistance is different from previously determined connection resistances by more than a threshold. If so, this may indicate a loose connection and control transfers to 692. Otherwise, control continues at 696. At 696, control determines the desired resistance (as will be measured) for the heater when the heater reaches the target operative temperature. The desired resistance may be calculated as the sum of the heater resistance at the target temperature and the calculated connection resistance. In various implementations, the target temperature value may be received from the engine control module (such as via a transceiver over a communications bus).

Control continues at 700, where if the intake air heating request is still present, control transfers to 704; otherwise, control returns to 600 in FIG. 6A. At 704, if the overall timer has exceeded a shutoff period, control also returns to 600 of FIG. 6A; otherwise, control continues at 708. At 708, control determines whether the measurement timer is greater than or equal to the resistance measurement interval. If so, control transfers to 712; otherwise, control transfers to 716.

At 712, control measures current and voltage. At 720, control measures the ground voltage of the heater during a PWM off-time. If the intake air heater is still being driven at 100% duty cycle, control will set the PWM to a lower percentage, such as 90%, before the measurement and then return the duty cycle to 100% (as shown at 616 and 648 of FIG. 6A) Control continues at 724, where the resistance is calculated. At 728, control resets the measurement timer and continues at 732.

At 732, if the calculated resistance is out of range, control transfers to 692; otherwise, control transfers to 736. At 736, if the resistance indicates an over-temperature condition, control transfers to 692; otherwise, control continues at 716. At 716, if the controller temperature is greater than threshold, control transfers to 692; otherwise, control continues at 740.

At 740, control sets the PWM duty cycle to minimize the difference between the measured resistance and the desired resistance from 696. In other words, this acts as closed-loop control of the heater temperature to achieve the target operating temperature. For example, control may use proportional-integral or proportional-integral-derivative control with predetermined constants, where the figure of merit is the difference between the measured and desired temperatures Control then returns to 700 for another iteration of closed-loop control.

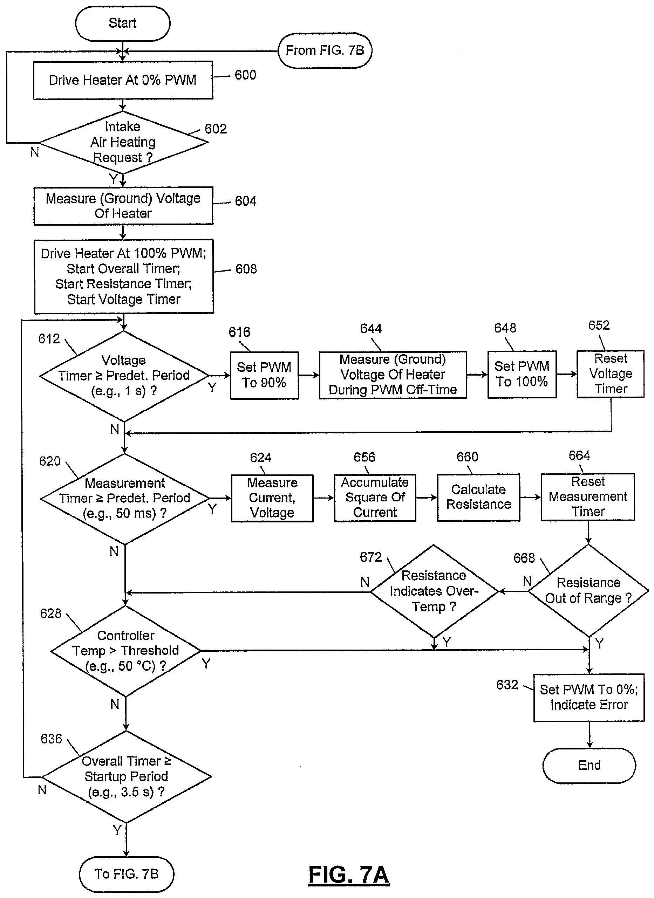

In FIGs. 7A-7B, a flowchart depicts heater control similar to that of FIGs. 6A-6B. In the method described in FIGs.6A-6B, errors in estimating the connection resistance may lead to errors in estimating the heater temperature. For example, errors in estimating the connection resistance, and shifts between measurement ground and heater ground, may result in estimation errors of up to 100 degrees Celsius or 150 degrees Celsius. The purpose of estimating the connection resistance is to minimize the measurement error associated with measuring the voltage across the heater element when the ground of the heater element is shifted (by the voltage drop across the non-zero connection resistance) from the ground of the measurement circuit.

If a certain heater temperature is desired, but measurement errors may result in the estimated temperature being higher than actual, the desired temperature may not actually be achieved when the estimated temperature reaches the desired temperature. To guarantee the desired temperature is actually reached, the heater may be driven until the estimated temperature reaches the desired temperature plus a safety margin. This may lengthen the amount of time necessary to be guaranteed to achieve the desired temperature, which maynot meet customer requirements for how quickly the heater should come up to temperature. The target temperature of the heater may be established by the engine manufacturer based on starting parameters of the engine and emissions targets.

The method described in FIGs. 7A-7B relies on accumulating the square of current delivered to the heater without relying so heavily on voltage measurements, which can be affected by, among other factors, ground shifts. Reference numerals in FIGs. 7A-7B that correspond to reference numerals of FIGs. 6A-6B indicate similar operation.

In FIG. 7A, control begins similarly to that of FIG. 6A. In some implementations, voltage measurements may be completely eliminated, meaning that blocks 604, 612, 616, 644, 648, and 652 could beomitted in comparison with FIG. 6A. Further, block 608 would be modified to remove starting the voltage timer.

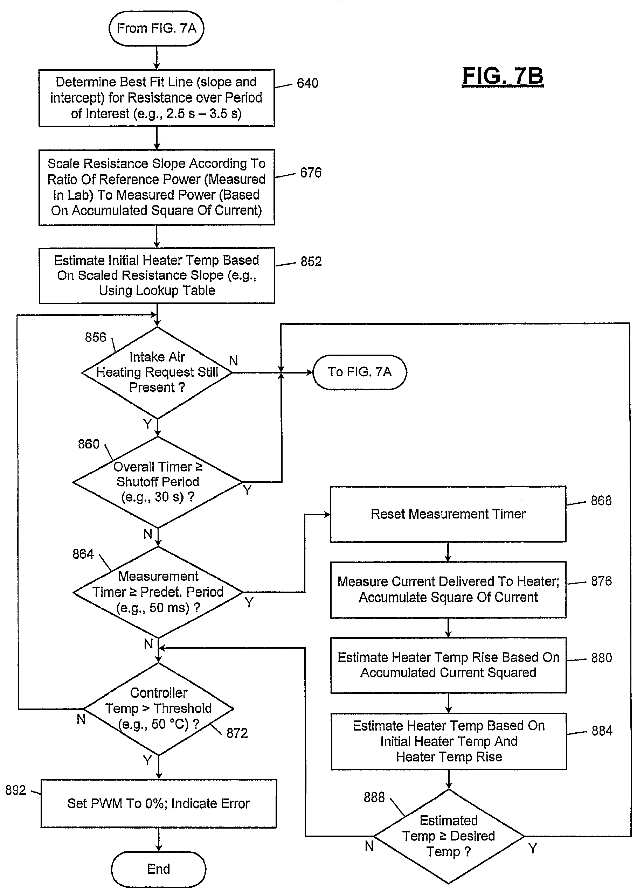

In FIG. 7B, blocks 640 and 676 are similar to those of FIG.6B. After 676, control continues at 852, where the initial heater temperature (that is, at the time the intake air heating request was received and control transferred to 604 in FIG. 7A) is estimated. The initial heater temperature is estimated based on the scaled resistance slope calculated in 676. A table as shown above may be used to look up the initial heater temperature based on the scaled resistance slope. In other implementations, an expression that is a function of scaled resistance slope may be evaluated to estimate initial heater temperature.

At 856, control determines whether the intake air heating request is still present. If so, control transfers to 860; otherwise, control returns to FIG. 7A, where the heater is turned off by driving the heater with a 0% duty cycle. At 860, if the overall timer has exceeded a shutoff period, such as 30 seconds, control returns to FIG. 7A; otherwise, control continues at 864. At 864, if the measurement timer has reached a predetermined period, such as 50 milliseconds, control transfers to 868; otherwise, control transfers to 872.

At 868, the measurement timer is reset. At 876, control measures the current delivered to the heater. This measurement may be a single current measurement or may represent an average of current measured over a period of time since the last measurement interval. The square of the measured current is calculated and added to the accumulated current squared. At 880, the heater temperature rise is estimated based on the accumulated square of the current. For example, a linear or polynomial expression with predefined coefficients may be used to calculate the heater temperature increase as a function of the accumulated square of the current.

At 884, the heater temperature is estimated by adding the temperature increase to the initial heater temperature. At 888, control determines whether the estimated temperature is greater than or equal to the target temperature. If so, control transfers to FIG. 7A; otherwise, control continues at 872. This turns off the heater once the desired temperature has been reached. In implementations where the engine may not be started immediately upon achieving the desired temperature, closed-loop control may be performed to maintain the temperature.

For example, instead of transferring directly to FIG. 7A, control may measure a reference heater resistance, which corresponds to the current heater temperature, which control believes to be the desired temperature. Control can then perform closed-loop control on the PWM duty cycle to minimize the difference between the reference heater resistance and a measured heater resistance updated periodically (such as every 50 milliseconds). While performing closed-loop control, the shutoff period check (860), controller temp check (872), and air heating request presence check (852) would still be performed. With closed-loop control, the temperature of the heater can be approximately maintained as heat is dissipated into the surrounding air, which will be much colder than the heater.

Control at 888 may be performed in the domain of the accumulated current squared instead of requiring a conversion to estimated temperature. For example, 884 may be eliminated and 852 may be supplemented by determining a target accumulated current squared value to reach. Then, block 888 simply compares the accumulated current squared value to the target value. Once the target value is reached, a sufficient amount of current has been delivered to the heater to cause the heater to reach the desired temperature.

At 872, if the temperature of the controller circuitry or housing is greater than a threshold, such as 50 degrees Celsius, control continues at 892; otherwise, controller turns to 856. The controller temperature may be measured using a thermistor. At 892, the heater is disabled by setting the duty cycle to 0% and an error is indicated. Control then ends.

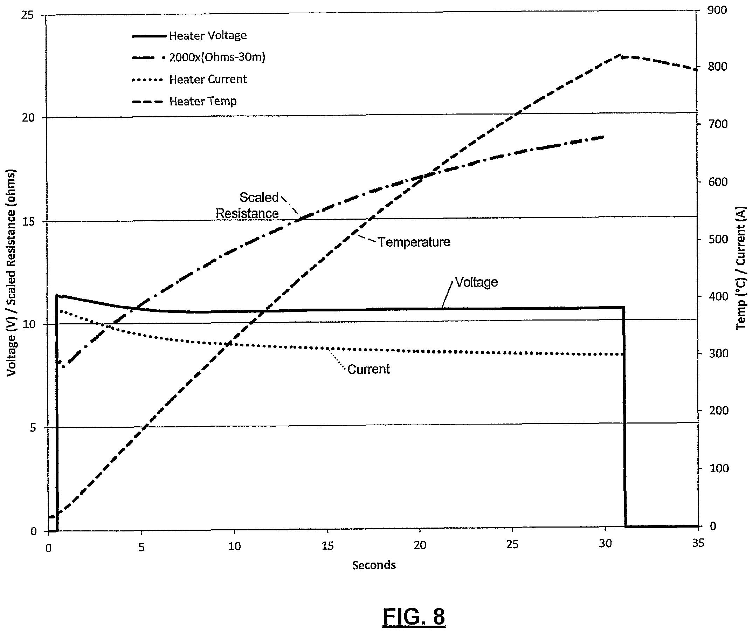

In FIG. 8, a plot shows heater voltage, heater amperage, heater element temperature, and heater resistance (as measured at the battery) over a 35-second startup. The axis on the right (from 0 to 900) indicates both element temperature in degrees Celsius as well as current in amps. The axis on the left (from 0 to 25) indicates voltage in volts as well as a scaled and shifted value of the resistance in the Ohms. To fit the resistance of the heater as measured at the battery on the same scale as voltage, 30 milliohms were subtracted from the measured resistance and the result was multiplied by 2000. In this particular test, the connection resistance was approximately 4 milliohms, which may be higher than in practical implementations.

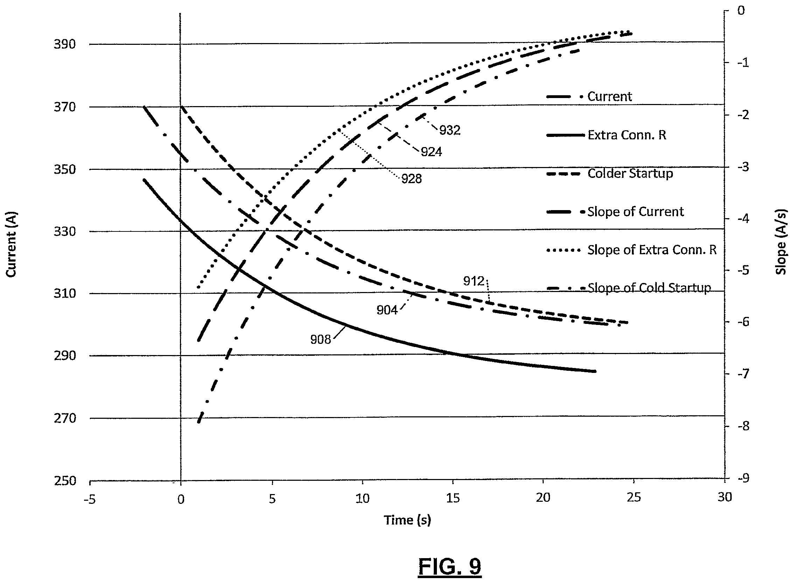

In FIG. 9, plotted functions of current over time as well as the derivatives of the current functions are plotted. The left-hand axis (from-9 to 0) corresponds to the slope of the current in amps per second. The resistance can be calculated from the amperage curves since the voltage is at 11.0 V.

A first current trace 904 corresponds to a standard interconnect resistance at a reference temperature (such as 20°C) as used in laboratory measurements. A second current trace 908 corresponds to an increased interconnect resistance. A third current trace 912 corresponds to a lower temperature startup. Mathematical derivative traces 924, 928, and 932 correspond to current traces 904, 908, and 912, respectively.

While the pictured current slopes are negative, the corresponding resistance slopes (as measured by the control circuit) are positive, as Ohm's law relates them inversely. Without looking at slope, more interconnect resistance looks the same as a hotter starting coil temperature. Because the rate of change of resistance slows as the coil heats up, the slope of a coil starting at a very low temperature is lower than one that started at a higher temperature. The slope can therefore differentiate between how much of the observed resistance was interconnect resistance and how much was heat-related resistance increase in the heater coil.

to a lower temperature startup. Mathematical derivative traces 924, 928, and 932 correspond to current traces 904, 908, and 912, respectively.

While the pictured current slopes are negative, the corresponding resistance slopes (as measured by the control circuit) are positive, as Ohm's law relates them inversely. Without looking at slope, more interconnect resistance looks the same as a hotter starting coil temperature. Because the rate of change of resistance slows as the coil heats up, the slope of a coil starting at a very low temperature is lower than one that started at a higher temperature. The slope can therefore differentiate between how much of the observed resistance was interconnect resistance and how much was heat-related resistance increase in the heater coil.


CONCLUSION


The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements. As used herein, the phrase at least one of A, B, and C should be construed to mean a logical (A OR B OR C), using a non-exclusive logical OR, and should not be construed to mean "at least one of A, at least one of B, and at least one of C."

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks and flowchart elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language) or XML (extensible markup language), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Javascript®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

**Claims**

1. An intake air heating system for a vehicle (200), the system comprising:

   an electrical switching device (300) configured to selectively connect a battery (220) of the vehicle (200) to a resistor (348) of an air heater (208) in contact with intake air of the vehicle (200); and
   a control circuit (328) configured to

   in response to an enable signal from an engine controller (216), drive the electrical switching device (300) to connect the battery (220) to the resistor (348) of the air heater (208) at full current;
   measure a resistance of the resistor (348) of the air heater (208) indicative of an initial temperature of the resistor (348); and estimate a temperature increase by:

   repeatedly measuring a present value of current through the electrical switching device (300) or repeatedly computing an average of current measured over a period of time;
   accumulating a current squared value of the measured current values or the averages;
   estimating the temperature increase based on the accumulated current squared value;

   estimate a temperature of the resistor (348) of the air heater (208) based on a sum of the initial temperature of the resistor (348) and the temperature increase; and
   in response to the estimated temperature of the resistor (348) of the air heater (208) exceeding a desired temperature value, modulate the electrical switching device (300) to reduce current from the battery (220) of the vehicle (200) to the resistor (348).

2. The system of claim 1 wherein the control circuit (328) is configured to estimate the temperature increase based on a lookup table of temperature increases indexed by the accumulated current squared values.

3. The system of claim 1 wherein the control circuit (328) is configured to estimate the initial temperature of the resistor (348) of the air heater (208) based on a rate of rise of the resistance of the resistor (348) over a period of interest.

4. The system of claim 3 wherein the control circuit (328) is configured to, prior to estimating the initial temperature of the resistor (348) of the air heater (208), scale the rate of rise by a ratio of (i) a reference current squared value to (ii) the accumulated current squared value.

5. The system of claim 1 wherein the control circuit (328) is configured to measure the resistance of the resistor (348) of the air heater (208) by:

   measuring a present value of current through the electrical switching device (300) and a voltage value at a terminal of the electrical switching device (300); and
   calculating the resistance of the resistor (348) based on a ratio of the measured voltage value to the measured current value.

6. The system of claim 5 wherein the control circuit (328) is configured to:

   measure a reference voltage at the terminal of the electrical switching device (300) while the electrical switching device (300) is off; and
   subtract the reference voltage from the measured voltage value prior to calculating the resistance of the resistor (348) of the air heater (208).

7. The system of claim 1 wherein the electrical switching device (300) comprises a plurality of transistors connected in parallel.

8. The system of claim 1 wherein the control circuit (328) is configured to drive the electrical switching device (300) using pulse-width modulation.

9. The system of claim 1 further comprising:

a metal enclosure housing the electrical switching device (300) and the control circuit (328),
wherein the electrical switching device (300) is thermally coupled to the metal enclosure, which absorbs heat from the electrical switching device (300).

10. The system of claim 9 further comprising:

a temperature sensor (340) configured to measure a temperature of at least one of the control circuit (328), the electrical switching device (300), and the metal enclosure,
wherein the control circuit (328) is configured to turn off the electrical switching device (300) in response to the measured temperature exceeding a temperature threshold.

11. The system of claim 1 further comprising a transceiver (344) configured to (i) receive the desired temperature value from the engine controller (216) over a communications bus and (ii) provide the desired temperature value to the control circuit (328).

12. The system of claim 11 wherein the transceiver (344) is configured to:

command the control circuit (328) to enter a low-power mode in response to inactivity on the communications bus for more than a predetermined period of time; and
command the control circuit (328) to enter an operating mode in response to receiving a predetermined signal on the communications bus,
wherein the control circuit (328) consumes less power when in the low-power mode than when in the operating mode.

13. The system of claim 1 wherein:

the battery (220) is **characterized by** an internal resistance; and
the control circuit (328) is configured to:

measure a first voltage of the battery (220) while the battery (220) is disconnected from the resistor (348) of the air heater (208) by the electrical switching device (300);
once the electrical switching device (300) connects the resistor (348) to the battery (220), measure a second voltage of the battery (220) and measure a current through the electrical switching device (300); and
determine the internal resistance based on the first voltage, the second voltage, and the current.

14. A method of operating an intake air heating system for a vehicle (200), the method comprising:

in response to an enable signal from an engine controller (216), driving an electrical switching device (300) to connect a battery (220) to a resistor (348) of an air heater (208) at full current;
measuring a resistance of the resistor (348) of the air heater (208) indicative of an initial temperature of the resistor (348);
estimating a temperature increase including:

repeatedly measuring a present value of current through the electrical switching device (300) or repeatedly computing an average of current measured over a period of time;
accumulating a current squared value of the measured current values or averages;
estimating the temperature increase based on the accumulated current squared value;
estimating a temperature of the resistor (348) of the air heater (208) based on a sum of the initial temperature of the resistor (348) and the temperature increase; and
in response to the temperature of the resistor (348) of the air heater (208) exceeding a desired temperature value, modulating the electrical switching device (300) to reduce current from the battery (220) of the vehicle (200) to the resistor (348).

**15.** The method of claim 14 further comprising estimating the initial temperature of the resistor (348) of the air heater (208) based on a rate of rise of the resistance of the resistor (348) over a period of interest.

**16.** The method of claim 15 further comprising, prior to estimating the initial temperature of the resistor (348) of the air heater (208), scaling the rate of rise by a ratio of (i) a reference current squared value to (ii) the accumulated current squared value.

**Patentansprüche**

**1.** Einlassluftheizsystem für ein Fahrzeug (200), wobei das System aufweist:

eine elektrische Schaltvorrichtung (300), die so konfiguriert ist, dass sie eine Batterie (220) des Fahrzeugs (200) selektiv mit einem Widerstand (348) eines Luftheizers (208) in Kontakt mit der Ansaugluft des Fahrzeugs (200) verbindet; und
eine Steuerschaltung (328), die dazu eingerichtet ist:

in Reaktion auf ein Freigabesignal von einem Motorregler (216) die elektrische Schaltvorrichtung (300) so anzusteuern, dass die Batterie (220) mit dem Widerstand (348) des Lufterhitzers (208) bei vollem Strom verbunden wird;
einen Widerstand des Widerstandes (348) des Lufterhitzers (208) zu messen, der eine Anfangstemperatur des Widerstandes (348) anzeigt; und
Schätzen einer Temperaturerhöhung durch:

wiederholtes Messen eines aktuellen Stromwertes durch die elektrische Schaltvorrichtung (300) oder wiederholtes Berechnen eines Mittelwertes des über eine Zeitspanne gemessenen Stroms;
Aufsummieren eines Stromquadratwertes der gemessenen Stromwerte oder der Mittelwerte;
Abschätzen der Temperaturerhöhung auf der Grundlage des aufsummierten Stromquadratwertes;
Schätzen einer Temperatur des Widerstandes (348) des Lufterhitzers (208) auf der Grundlage einer Summe der Anfangstemperatur des Widerstandes (348) und des Temperaturanstiegs; und
als Reaktion auf die geschätzte Temperatur des Widerstandes (348) des Luftheizgerätes (208), die einen gewünschten Temperaturwert überschreitet, Modulieren der elektrischen Schaltvorrichtung (300), um den Strom von der Batterie (220) des Fahrzeuges (200) zum Widerstand (348) zu reduzieren.

**2.** System nach Anspruch 1, bei dem die Steuerschaltung (328) so konfiguriert ist, dass sie den Temperaturanstieg auf der Grundlage einer Nachschlagetabelle von Temperaturerhöhungen abschätzt, die durch die aufsummierten Stromquadratwerte indiziert sind.

**3.** System nach Anspruch 1, bei dem die Steuerschaltung (328) so konfiguriert ist, dass sie die Anfangstemperatur des Widerstands (348) des Lufterhitzers (208) auf der Grundlage einer Anstiegsrate des Widerstands des Widerstands (348) über einen interessierenden Zeitraum schätzt.

**4.** System nach Anspruch 3, bei dem die Steuerschaltung (328) so konfiguriert ist, dass sie vor dem Schätzen der Anfangstemperatur des Widerstands (348) des Lufterhitzers (208) die Anstiegsgeschwindigkeit durch ein Verhältnis von (i) einem quadrierten Referenzstromwert zu (ii) dem quadrierten kumulierten Stromwert skaliert.

**5.** System nach Anspruch 1, bei dem die Steuerschaltung (328) so konfiguriert ist, dass sie den Widerstandswert des Widerstandes (348) des Lufterhitzers (208) misst durch:

Messen eines aktuellen Stromwertes durch die elektrische Schaltvorrichtung (300) und eines Spannungswertes an einem Anschluss der elektrischen Schaltvorrichtung (300); und
Berechnen des Widerstands des Widerstands (348) auf der Grundlage eines Verhältnisses des gemessenen Spannungswerts zum gemessenen Stromwert.

**6.** System nach Anspruch 5, bei dem die Steuerschaltung (328) so konfiguriert ist, dass sie:

eine Referenzspannung an der Klemme der elektrischen Schaltvorrichtung (300) misst, während die elektrische Schaltvorrichtung (300) ausgeschaltet ist; und

die Referenzspannung vom gemessenen Spannungswert subtrahiert, bevor der Widerstand des Widerstandes (348) des Lufterhitzers (208) berechnet wird.

7. System nach Anspruch 1, bei dem die elektrische Schaltvorrichtung (300) eine Vielzahl von parallel geschalteten Transistoren aufweist.

8. System nach Anspruch 1, bei dem die Steuerschaltung (328) so konfiguriert ist, dass sie die elektrische Schaltvorrichtung (300) unter Verwendung von Pulsweitenmodulation steuert.

9. System nach Anspruch 1, das ferner aufweist:
ein Metallgehäuse, in dem die elektrische Schaltvorrichtung (300) und die Steuerschaltung (328) untergebracht sind, wobei die elektrische Schaltvorrichtung (300) thermisch mit dem Metallgehäuse gekoppelt ist, das die Wärme von der elektrischen Schaltvorrichtung (300) absorbiert.

10. System nach Anspruch 9, das ferner aufweist:
einen Temperatursensor (340), der so konfiguriert ist, dass er eine Temperatur von mindestens einem von der Steuerschaltung (328), der elektrischen Schaltvorrichtung (300) und dem Metallgehäuse misst, wobei die Steuerschaltung (328) so konfiguriert ist, dass sie die elektrische Schaltvorrichtung (300) als Reaktion auf das Überschreiten eines Temperaturschwellenwertes durch die gemessene Temperatur abschaltet.

11. System nach Anspruch 1, das ferner einen Transceiver (344) aufweist, der so konfiguriert ist, dass er (i) den gewünschten Temperaturwert von der Motorsteuerung (216) über einen Kommunikationsbus empfängt und (ii) den gewünschten Temperaturwert an die Steuerschaltung (328) liefert.

12. System nach Anspruch 11, bei dem der Transceiver (344) so konfiguriert ist, dass er
der Steuerschaltung (328) befiehlt, als Reaktion auf eine Inaktivität auf dem Kommunikationsbus für mehr als eine vorbestimmte Zeitdauer in einen Niedrigleistungsmodus einzutreten; und
der Steuerschaltung (328) befiehlt, als Reaktion auf den Empfang eines vorgegebenen Signals auf dem Kommunikationsbus in einen Betriebsmodus zu wechseln,
wobei die Steuerschaltung (328) in dem Niedrigleistungsmodus weniger Leistung verbraucht als in dem Betriebsmodus.

13. System nach Anspruch 1, bei dem:

die Batterie (220) durch einen Innenwiderstand gekennzeichnet ist; und
der die Steuerschaltung (328) dazu konfiguriert ist:

eine erste Spannung der Batterie (220) zu messen, während die Batterie (220) durch die elektrische Schaltvorrichtung (300) vom Widerstand (348) des Lufterhitzers (208) getrennt ist;
sobald die elektrische Schaltvorrichtung (300) den Widerstand (348) mit der Batterie (220) verbindet, eine zweite Spannung der Batterie (220) zu messen und einen Strom durch die elektrische Schaltvorrichtung (300) zu messen; und
den Innenwiderstand auf der Grundlage der ersten Spannung, der zweiten Spannung und des Stroms zu bestimmen.

14. Verfahren zum Betreiben eines Einlassluftheizsystems für ein Fahrzeug (200), wobei das Verfahren umfasst:

als Reaktion auf ein Freigabesignal von einem Motorsteuergerät (216), Ansteuern einer elektrischen Schaltvorrichtung (300) zum Verbinden einer Batterie (220) mit einem Widerstand (348) eines Luftheizers (208) bei vollem Strom;
Messen eines Widerstandes des Widerstandes (348) des Lufterhitzers (208), der eine Anfangstemperatur des Widerstandes (348) anzeigt;
Abschätzen einer Temperaturerhöhung, das aufweist:

wiederholtes Messen eines gegenwärtigen Stromwertes durch die elektrische Schaltvorrichtung (300) oder wiederholtes Berechnen eines Mittelwertes des über eine Zeitperiode gemessenen Stroms;
Aufsummieren eines Stromquadratwertes der gemessenen Stromwerte oder Strommittelwerte;
Abschätzen des Temperaturanstiegs auf der Grundlage des aufsummierten Stromquadratwertes;

Abschätzen einer Temperatur des Widerstandes (348) des Lufterhitzers (208) auf der Grundlage einer Summe der Anfangstemperatur des Widerstandes (348) und des Temperaturanstiegs; und

als Reaktion auf das Überschreiten eines gewünschten Temperaturwertes durch die Temperatur des Widerstandes (348) des Luftheizgerätes (208), Modulieren der elektrischen Schaltvorrichtung (300), um den Strom von der Batterie (220) des Fahrzeuges (200) zu dem Widerstand (348) zu reduzieren.

15. Verfahren nach Anspruch 14, das ferner aufweist: Abschätzen der Anfangstemperatur des Widerstands (348) des Luftheizers (208) auf der Grundlage einer Anstiegsrate des Widerstands des Widerstands (348) über eine interessierende Zeitspanne.

16. Verfahren nach Anspruch 15, das ferner aufweist: vor dem Abschätzen der Anfangstemperatur des Widerstands (348) des Lufterhitzers (208), Skalieren der Anstiegsgeschwindigkeit durch ein Verhältnis von (i) einem Referenzstromquadratwerts zu (ii) dem aufsummierten Stromquadratwert.

**Revendications**

1. Système de chauffage d'air d'admission pour un véhicule (200), le système comprenant :

un dispositif de commutation électrique (300) configuré pour connecter de manière sélective une batterie (220) du véhicule (200) à une résistance (348) d'un dispositif de chauffage d'air (208) en contact avec l'air d'admission du véhicule (200) ; et
un circuit de commande (328) configuré pour,
en réponse à un signal de validation provenant d'un contrôleur de moteur à combustion interne (216), commander le dispositif de commutation électrique (300) pour connecter la batterie (220) à la résistance (348) du dispositif de chauffage d'air (208) à un courant maximum ;
mesurer une valeur de résistance de la résistance (348) du dispositif de chauffage d'air (208) indicative d'une température initiale de la résistance (348) ; et
estimer une augmentation de température en :

mesurant à plusieurs reprises une valeur actuelle du courant à travers le dispositif de commutation électrique (300) ou calculant à plusieurs reprises une moyenne du courant mesuré sur une période de temps ;
accumulant une valeur de courant élevée au carré des valeurs de courant mesurées ou des moyennes ;
estimant l'augmentation de température sur la base de la valeur de courant élevée au carré accumulée ;
estimer une température de la résistance (348) du dispositif de chauffage d'air (208) sur la base d'une somme de la température initiale de la résistance (348) et de l'augmentation de température ; et
en réponse au fait que la température estimée de la résistance (348) du dispositif de chauffage d'air (208) dépasse une valeur de température souhaitée, moduler le dispositif de commutation électrique (300) pour réduire le courant circulant de la batterie (220) du véhicule (200) vers la résistance (348).

2. Système selon la revendication 1, dans lequel le circuit de commande (328) est configuré pour estimer l'augmentation de température sur la base d'une table de correspondance des augmentations de température indexées par les valeurs de courant élevées au carré accumulées.

3. Système selon la revendication 1, dans lequel le circuit de commande (328) est configuré pour estimer la température initiale de la résistance (348) du dispositif de chauffage d'air (208) sur la base d'un taux d'augmentation de la valeur de résistance de la résistance (348) sur une période présentant un intérêt.

4. Système selon la revendication 3, dans lequel le circuit de commande (328) est configuré pour, avant l'estimation de la température initiale de la résistance (348) du dispositif de chauffage d'air (208), mettre à l'échelle le taux d'augmentation par un rapport entre (i) une valeur de courant élevée au carré de référence et (ii) la valeur de courant élevée au carré accumulée.

5. Système selon la revendication 1, dans lequel le circuit de commande (328) est configuré pour mesurer la valeur de résistance de la résistance (348) du dispositif de chauffage d'air (208) en :

mesurant une valeur actuelle du courant à travers le dispositif de commutation électrique (300) et une valeur de tension au niveau d'une borne du dispositif de commutation électrique (300) ; et

calculant la valeur de résistance de la résistance (348) sur la base d'un rapport entre la valeur de tension mesurée et la valeur de courant mesurée.

6. Système selon la revendication 5, dans lequel le circuit de commande (328) est configuré pour :

mesurer une tension de référence au niveau de la borne du dispositif de commutation électrique (300) alors que le dispositif de commutation électrique (300) est désactivé ; et
soustraire la tension de référence de la valeur de tension mesurée avant le calcul de la valeur de résistance de la résistance (348) du dispositif de chauffage d'air (208).

7. Système selon la revendication 1, dans lequel le dispositif de commutation électrique (300) comprend une pluralité de transistors connectés en parallèle.

8. Système selon la revendication 1, dans lequel le circuit de commande (328) est configuré pour commander le dispositif de commutation électrique (300) en utilisant une modulation de durée d'impulsion.

9. Système selon la revendication 1 comprenant en outre :

une enceinte métallique logeant le dispositif de commutation électrique (300) et le circuit de commande (328), dans lequel le dispositif de commutation électrique (300) est couplé thermiquement à l'enceinte métallique, laquelle absorbe la chaleur provenant du dispositif de commutation électrique (300).

10. Système selon la revendication 9 comprenant en outre :

un capteur de température (340) configuré pour mesurer une température d'au moins l'un du circuit de commande (328), du dispositif de commutation électrique (300), et de l'enceinte métallique, dans lequel le circuit de commande (328) est configuré pour désactiver le dispositif de commutation électrique (300) en réponse au fait que la température mesurée dépasse un seuil de température.

11. Système selon la revendication 1 comprenant en outre un émetteur-récepteur (344) configuré pour (i) recevoir la valeur de température souhaitée du contrôleur de moteur à combustion interne (216) sur un bus de communication et (ii) fournir la valeur de température souhaitée au circuit de commande (328).

12. Système selon la revendication 11, dans lequel l'émetteur-récepteur (344) est configuré pour :

commander le circuit de commande (328) pour entrer dans un mode de faible puissance en réponse à l'inactivité sur le bus de communication pendant une durée supérieure à une période de temps prédéterminée ; et
commander le circuit de commande (328) pour entrer dans un mode de fonctionnement en réponse à la réception d'un signal prédéterminé sur le bus de communication,
dans lequel le circuit de commande (328) consomme moins de puissance dans le mode de faible puissance que dans le mode de fonctionnement.

13. Système selon la revendication 1, dans lequel :

la batterie (220) est **caractérisée par** une résistance interne ; et
le circuit de commande (328) est configuré pour :

mesurer une première tension de la batterie (220) alors que la batterie (220) est déconnectée de la résistance (348) du dispositif de chauffage d'air (208) par le dispositif de commutation électrique (300) ;
une fois que le dispositif de commutation électrique (300) a connecté la résistance (348) à la batterie (220), mesurer une deuxième tension de la batterie (220) et mesurer un courant à travers le dispositif de commutation électrique (300) ; et
déterminer la résistance interne sur la base de la première tension, de la deuxième tension, et du courant.

14. Procédé de fonctionnement d'un système de chauffage d'air d'admission pour un véhicule (200), le procédé comprenant :

en réponse à un signal de validation provenant d'un contrôleur de moteur à combustion interne (216), la commande d'un dispositif de commutation électrique (300) pour connecter une batterie (220) à une résistance (348) d'un dispositif de chauffage d'air (208) à un courant maximum ;

la mesure d'une valeur de résistance de la résistance (348) du dispositif de chauffage d'air (208) indicative d'une température initiale de la résistance (348) ;

l'estimation d'une augmentation de température comprenant :

la mesure à plusieurs reprises d'une valeur actuelle du courant à travers le dispositif de commutation électrique (300) ou le calcul à plusieurs reprises d'une moyenne du courant mesuré sur une période de temps ;

l'accumulation d'une valeur de courant élevée au carré des valeurs de courant mesurées ou des moyennes ;

l'estimation de l'augmentation de température sur la base de la valeur de courant élevée au carré accumulée ;

l'estimation d'une température de la résistance (348) du dispositif de chauffage d'air (208) sur la base d'une somme de la température initiale de la résistance (348) et de l'augmentation de température ; et

en réponse au fait que la température de la résistance (348) du dispositif de chauffage d'air (208) dépasse une valeur de température souhaitée, la modulation du dispositif de commutation électrique (300) pour réduire le courant circulant de la batterie (220) du véhicule (200) vers la résistance (348).

15. Procédé selon la revendication 14 comprenant en outre l'estimation de la température initiale de la résistance (348) du dispositif de chauffage d'air (208) sur la base d'un taux d'augmentation de la valeur de résistance de la résistance (348) sur une période présentant un intérêt.

16. Procédé selon la revendication 15 comprenant en outre, avant l'estimation de la température initiale de la résistance (348) du dispositif de chauffage d'air (208), la mise à l'échelle du taux d'augmentation par un rapport entre (i) une valeur de courant élevée au carré de référence et (ii) la valeur de courant élevée au carré accumulée.

**FIG. 1**

Prad Art

Power
Connections

112 — Engine Controller

116 — Air Heater Controller

120 — Battery

108 — Air Heater

Engine

104

100

FIG. 2

**FIG. 3A**

EP 3 418 549 B1

**FIG. 3B**

EP 3 418 549 B1

FIG. 4

24

```
                    ┌──────────┐
                    │   Start  │
                    └────┬─────┘
                         │
              N     ╱────┴────╲       400
        ┌──────────  Engine Start ────
        │          ╲ Request ? ╱
        │           ╲────┬────╱
        │                │ Y
        │        ┌───────┴───────┐        ┌──────────────────┐
        │    404 │  Reset Timer  │    432 │ Reset Timer; Timer2│
        │        └───────┬───────┘        └─────────┬────────┘
        │                │                          │
        │        ┌───────┴───────┐        ┌─────────┴────────┐  436
        │    408 │ Command Intake│        │ Command Intake Air│
        │        │  Air Heater On│        │   Heater On       │
        │        └───────┬───────┘        └─────────┬────────┘
        │                │                          │
        │                │                ┌─────────┴────────┐  440
        │                │                │Determine Additional│
        │                │                │  Heating Time     │
        │                │                └─────────┬────────┘
        │        ╱───────┴────╲                     │
        │  500  ╱  Heater Done  ╲  N        ┌───────────────────┐
        │  ─────  Signal Received?──         │Command Intake Air │ 456
        │       ╲             ╱             │Heater On; Reset   │
        │        ╲───────┬───╱              │Timer2             │
        │                │ Y               └─────────┬─────────┘
        │        ┌───────┴───────┐                   │ Y
        │    420 │ Command Intake│              ╱────┴─────╲
        │        │  Air Heater Off│      N     ╱  Timer2 ≥   ╲
        │        └───────┬───────┘   ──────────  Shutoff Period
        │                │                     ╲ (e.g., 30s)? ╱
        │        ┌───────┴───────┐              ╲────┬───────╱  452
        │    424 │  Start Engine │                   │
        │        └───────┬───────┘         ╱─────────┴╲
        │                │             444 ╱  Timer ≥   ╲ N
        │        ╱───────┴────╲       ──────  Additional  ─────
        │   428 ╱   Ambient    ╲  Y        ╲   Time ?    ╱
        │  ─────  Temperature < ────        ╲────┬──────╱
        │       ╲  Threshold ? ╱                 │ Y
        │        ╲───────┬────╱          ┌───────┴────────┐
        │                │ N         448 │Command Intake  │
        └────────────────┴──────────────│ Air Heater Off │
                                        └────────────────┘
```

**FIG. 5**

**FIG. 6A**

From FIG. 6A

640 — Determine Best Fit Line (slope and intercept) for Resistance over Period of Interest (e.g., 2.5 s – 3.5 s)

676 — Scale Resistance Slope According To Ratio Of Reference Power (Measured In Laboratory) To Measured Power (Based On Accumulated Square Of Current)

680 — Determine Thermal Resistance Offset Based On Scaled Resistance Slope (e.g., Using Lookup Table)

684 — Determine Connection Resistance = Measured Resistance (at 250 ms) – Heater Resistance (at 20 °C) – Thermal Resistance Offset

688 — Connection Resistance Different from Previous Connection Resistances by > Threshold ? — Y

N

696 — Determine Desired Resistance (as Measured) = Heater Resistance (at Target Temp) + Connection Resistance

704 — Overall Timer ≥ Shutoff Period (e.g., 30 s) ? — N

700 — Intake Air Heating Request Still Present ? — Y

N — To FIG. 6A

708 — Measurement Timer ≥ Predet. Period (e.g., 50 ms) ? — Y

712 — Measure Current, Voltage

720 — Measure (Ground) Voltage Of Heater During PWM Off-Time

724 — Calculate Resistance

728 — Reset Measurement Timer

N

736 — Resistance Indicates Over-Temp ? — N

732 — Resistance Out of Range ? — N

Y

Y

716 — Controller Temp > Threshold (e.g., 50 °C) ? — Y

N

740 — Control PWM To Minimize Difference Between Measured Resistance And Desired Resistance (Acts As Closed-Loop Control Of Heater Temp To Target Temp)

692 — Set PWM To 0%; Indicate Error

End

**FIG. 6B**

27

**FIG. 7A**

**FIG. 7B**

From FIG. 7A

Determine Best Fit Line (slope and intercept) for Resistance over Period of Interest (e.g., 2.5 s – 3.5 s) — 640

Scale Resistance Slope According To Ratio Of Reference Power (Measured In Lab) To Measured Power (Based On Accumulated Square Of Current) — 676

Estimate Initial Heater Temp Based On Scaled Resistance Slope (e.g., Using Lookup Table) — 852

856 — Intake Air Heating Request Still Present ?  N → To FIG. 7A

Y

860 — Overall Timer ≥ Shutoff Period (e.g., 30 s) ?  Y

N

864 — Measurement Timer ≥ Predet. Period (e.g., 50 ms) ?  Y

N

Controller Temp > Threshold (e.g., 50 °C) ? — 872   N

Y

892 — Set PWM To 0%; Indicate Error

End

Reset Measurement Timer — 868

Measure Current Delivered To Heater; Accumulate Square Of Current — 876

Estimate Heater Temp Rise Based On Accumulated Current Squared — 880

Estimate Heater Temp Based On Initial Heater Temp And Heater Temp Rise — 884

888 — Estimated Temp ≥ Desired Temp ?  N ... Y

29

FIG. 8

EP 3 418 549 B1

**FIG. 9**

EP 3 418 549 B1

**EP 3 418 549 B1**

**REFERENCES CITED IN THE DESCRIPTION**

**Patent documents cited in the description**

- EP 1852597 A1
- US 7472695 B